# EUROPÄISCHE PATENTANMELDUNG

(11) **EP 3 244 186 A1**
(43) Veröffentlichungstag der Anmeldung: **15.11.2017**
(21) Anmeldenummer: 16169036.7
(22) Anmeldetag: 10.05.2016
(51) Int. Cl.: G01M 99/00

(54) **PRÜFKAMMER UND VERFAHREN ZUR TEMPERATURMESSUNG VON PRÜFGUT IN EINER PRÜFKAMMER**

(71) Anmelder: Weiss Umwelttechnik GmbH, 35447 Reiskirchen (DE)
(72) Erfinder: SCHLOSSER, Volker, 35305 Grünberg (DE)
(74) Vertreter: advotec.

(57) **Zusammenfassung**

Die Erfindung betrifft ein Verfahren zur Temperaturmessung von Prüfgut in einer Prüfkammer, insbesondere Klimakammer, wobei in einem Prüfraum der Prüfkammer Prüfgut (40) angeordnet und in einem Prüfzeitabschnitt (37) im Prüfraum temperiert wird, wobei in dem Prüfzeitabschnitt mittels einer Wärmebildkamera aus Pixeln (41) gebildete thermografische Aufnahmen (39) des Prüfguts, die durch Bilddatensätze repräsentiert werden, erfasst werden, wobei die Bilddatensätze mittels einer Auswertevorrichtung verarbeitet werden, wobei den Bilddatensätzen jeweils Zeitwerte (38) innerhalb des Prüfzeitabschnitts zugeordnet werden, wobei je Zeitwert zumindest einem Pixel eines Bilddatensatzes ein Temperaturwert zugeordnet wird, derart, dass mittels der Wärmebildkamera eine Temperaturmessung eines von dem Pixel repräsentierten Oberflächenpunktes (42) des Prüfguts erfolgt.

## Beschreibung

Die Erfindung betrifft eine Prüfkammer sowie ein Verfahren zur Temperaturmessung von Prüfgut in einer Prüfkammer, insbesondere Klimakammer, wobei in einem Prüfraum der Prüfkammer Prüfgut angeordnet und in einem Prüfzeitabschnitt im Prüfraum temperiert wird wobei in dem Prüfzeitabschnitt mittels einer Wärmebildkamera aus Pixeln gebildete thermografische Aufnahmen des Prüfguts, die durch Bilddatensätze repräsentiert werden, erfasst werden, wobei die Bilddatensätze mittels einer Auswertevorrichtung verarbeitet werden, wobei den Bilddatensätzen jeweils Zeitwerte innerhalb des Prüfzeitabschnitts zugeordnet werden.

Bei der Temperatur- und Klimaprüfung von Prüfgut werden regelmäßig Prüfkammern mit verschließbaren Prüfräumen eingesetzt, in denen zumindest eine Temperatur und auch andere Umgebungsparameter einstellbar sind, um bestimmte klimatische und andere Umgebungsbedingungen simulieren zu können. Das Prüfgut wird dabei innerhalb eines Prüfablaufs beziehungsweise eines Prüfzeitabschnitts der simulierten Umgebungsbedingung ausgesetzt. Beispielsweise kann ein Prüfablauf auch mehrere Prüfzeitabschnitte mit sukzessiven Temperaturwechseln umfassen. Da sich derartige Prüfabläufe regelmäßig auch über einen Zeitraum von Stunden oder Tagen erstrecken können, sind eventuelle Veränderungen des Prüfguts, die durch die Prüfbedingung bedingt sein können nur im Nachhinein festzustellen, da keine permanente Überwachung des Prüfguts durch eine Person praktikabel erfolgen kann.

Auch ist es möglich, dass eine Prüfung von Prüfgut in einer unvorhergesehenen Weise verläuft, beispielsweise wenn Prüfgut durch die Umgebungsbedingungen zerstört wird oder sich ein unerwünschter Feuchtigkeitsniederschlag auf dem Prüfgut ausbildet. Der Prüfablauf muss dann erneut mit entsprechend angepassten Umgebungsbedingungen durchgeführt werden. Da die Nutzungszeiten von Prüfkammern kostenaufwendig sind, erhöhen sich die Kosten noch weiter mit sich wiederholenden Prüfabläufen.

Mit Wärmebildkameras ist es möglich eine thermografische Aufnahme des Prüfguts zu erstellen und auszuwerten, jedoch kann mit der thermografischen Aufnahme lediglich ein Temperaturgradient am Prüfgut dargestellt und gegebenenfalls anhand einer Intensität bzw. Farbgebung der Aufnahme ein Temperaturwert an einem Punkt des Prüfgutes abgeschätzt werden. Eine genauere Temperaturmessung am Prüfgut ist sonst nur umständlich oder mit einem Temperatursensor ungenau möglich, insbesondere wenn es sich bei dem Prüfgut um eine Platine mit diskreten Bauteilen handelt, die in ihren Abmessungen kleiner als der Temperatursensor sein können. Eine unverfälschte Temperaturmessung eines derartigen Bauteils ist dann kaum möglich. Hinzu kommt, dass Prüfkammern regelmäßig stark reflektierende Wände und Einbauten aufweisen, die eine genaue thermografische Aufnahme, unter anderem auch aufgrund von geringen Abständen innerhalb eines Prüfraums der Prüfkammer, erschweren. Wände des Prüfraums sowie Einbauten erzeugen Spiegelungen auf das Prüfgut, die eine korrekte Wärmebildmessung verhindern. Daher ist es bekannt, Innenwände von Prüfräumen mit speziellen Lacken zu beschichten, die einen Emissionsgrad von nahezu 1 aufweisen. Dennoch kann dann immer noch auf Prüfgut mit einem vergleichsweise geringen Emissionsgrad eine, eine Messung verfälschende Spiegelung erzeugt werden. Darüber hinaus erzeugt eine im Prüfraum eingebaute Wärmebildkamera auf Prüfgut ein Abbild ihrer selbst. Die Wärmebildkamera muss, um ihre korrekte Funktion zu gewährleisten, auf eine Temperatur um Raumtemperatur, idealerweise bei 25°C bzw. in einem Bereich von 10°C bis 40°C, temperiert werden. Werden dann beispielsweise thermografische Aufnahmen bei tiefen Temperaturen im Prüfraum mit einer entsprechend temperierten Wärmebildkamera bzw. einer entsprechenden Temperatur eines Schutzgehäuses der Wärmebildkamera aufgenommen, bildet sich die Wärmestrahlung des Schutzgehäuses auf einer Oberfläche des Prüfguts ab und verfälscht so eine Messung. Dieser Effekt tritt verstärkt in der Klimaprüftechnik auf, da mögliche Abstände zwischen einer Wärmebildkamera und einem Prüfgut aus Platzgründen im Prüfraum meist sehr gering sind.

Gerade bei Prüfgut mit unterschiedlichen Oberflächen, wie bei einer bestückten Platine, weist das Prüfgut bzw. der Prüfling durch eine Vielzahl von Bauteilen Oberflächen mit sich sehr stark unterscheidenden Emissionsgraden auf, weshalb sich eine Messung verschiedener Oberflächenbereiche derartigen Prüfguts sehr aufwendig gestaltet. Es ist daher für eine Messung bei verschiedenen Temperaturen stets erforderlich die Wärmebildkamera zu kalibrieren. Insbesondere eine Messung von Prüfgut, welches Temperaturwechseln in einem Bereich zwischen -70°C und Raumtemperatur ausgesetzt sein soll, ist daher nur mit großem Aufwand bei gleichzeitig nicht befriedigend genauen Messergebnissen durchzuführen.

Es ist daher Aufgabe der Erfindung, ein Verfahren zur Temperaturmessung von Prüfgut in einer Prüfkammer sowie eine Prüfkammer vorzuschlagen, mit dem bzw. der eine Temperaturmessung von Prüfgut einfach und mit hoher Messgenauigkeit durchgeführt werden kann.

Diese Aufgabe wird durch ein Verfahren mit den Merkmalen des Anspruchs 1 und eine Prüfkammer mit den Merkmalen des Anspruchs 14 gelöst.

Bei dem erfindungsgemäßen Verfahren zur Temperaturmessung von Prüfgut in einer Prüfkammer, insbesondere Klimakammer, wird in einem Prüfraum der Prüfkammer Prüfgut angeordnet und in einem Prüfzeitabschnitt im Prüfraum temperiert, wobei in dem Prüfzeitabschnitt mittels einer Wärmebildkamera aus Pixeln gebildete thermografische Aufnahmen des Prüfguts, die durch Bilddatensätze repräsentiert werden, erfasst werden, wobei die Bilddatensätze mittels einer Auswertevorrichtung verarbeitet werden, wobei den Bilddatensätzen jeweils Zeitwerte innerhalb des Prüfzeitabschnitts zugeordnet werden, wobei je Zeitwert zumindest ein Pixel eines Bilddatensatzes ein Temperaturwert innerhalb des Prüfzeitabschnitts zugeordnet wird, derart, dass mittels der Wärmebildkamera eine Temperaturmessung eines von dem Pixel repräsentierten Oberflächenpunktes des Prüfguts erfolgt.

Unter der Temperierung des Prüfguts in dem Prüfzeitabschnitt bzw. im Rahmen eines Prüfablaufs mit einem oder mehreren Prüfzeitabschnitten kann in dem Prüfraum eine Temperatur in einem Temperaturbereich von - 75°C bis + 180°C, vorzugsweise - 100°C bis + 200°C, innerhalb des Prüfraums ausgebildet werden. Dabei wird auch das Prüfgut entsprechend erwärmt und mittels der Wärmebildkamera zumindest abschnittsweise aufgenommen. Die thermografische Aufnahme des Prüfguts liefert einen Bilddatensatz je Aufnahme. Die thermografische Aufnahme wird aus Pixeln, entsprechend einer Bildauflösung der Wärmebildkamera, ausgebildet, wobei die Pixel durch Datenfelder in dem Bilddatensatz repräsentiert werden. Die Bilddatensätze werden in einer Abfolge an die Auswertevorrichtung übermittelt, die den Bilddatensätzen entsprechend der Abfolge jeweils Zeitwerte relativ bezogen auf den Prüfzeitabschnitt zuordnet. Demnach werden die Bilddatensätze mit Zeitwerten korreliert, sodass jeder Bilddatensatz einem Zeitpunkt des Prüfzeitabschnitts zugeordnet werden kann. So kann beispielsweise ein Temperaturverlauf an dem Prüfgut innerhalb des Prüfzeitabschnitts aufgezeichnet werden. Dieser Temperaturverlauf kann dadurch erhalten werden, dass für zumindest ein Pixel eines einzelnen Bilddatensatzes innerhalb des Prüfzeitabschnitts ein Temperaturwert verlässlich bekannt ist. Dies kann beispielsweise schon dadurch vorliegen, dass die Wärmebildkamera kalibriert wurde. Der Temperaturwert bzw. Temperaturverlauf des einen Pixels kann im Verhältnis auf andere Pixel übertragen werden, sodass sich für diese ebenfalls verhältnismäßig genaue Temperaturwerte ergeben. Die Zuordnung und Berechnung der Temperaturwerte für die Pixel wird mittels der Auswertevorrichtung durchgeführt. Insgesamt kann so mit der Wärmebildkamera eine vergleichsweise genaue Temperaturmessung eines Oberflächenpunktes des Prüfguts, der von einem Pixel mit dem bekannten Temperaturwert repräsentiert wird, durchgeführt werden. Dann ist es auch nicht mehr erforderlich direkt am Prüfgut Sensoren zur Temperaturmessung anzubringen. Eine Temperaturmessung von Prüfgut wird wesentlich vereinfacht und die Gefahr einer Beeinflussung der Temperaturmessung durch den Sensor am Prüfgut selbst, besteht nicht mehr.

Eine Zuordnung des Temperaturwertes zu einem Pixel kann in Abhängigkeit eines Intensitätswertes des Pixels erfolgen. Ein Intensitätswert kann ein Helligkeitswert oder ein Farbwert der thermografischen Aufnahme sein. Kann ein Pixel einem Oberflächenpunkt innerhalb des Prüfraums zugeordnet werden, dessen Temperatur eindeutig bekannt ist, kann der Intensitätswert des Pixels mit der betreffenden Temperatur gleichgesetzt werden. Wenn Pixel unterschiedliche Intensitätswerte aufweisen, kann diesen Intensitätswerten im Verhältnis zum Intensitätsunterschied ein Temperaturwert zugewiesen werden.

Weiter können Temperaturwerte von einzelnen Pixeln, Gruppen von Pixeln oder allen Pixeln eines Bilddatensatzes bestimmt werden. Die einzelnen Pixel können dabei voneinander entfernt sein bzw. die Gruppen von Pixeln benachbart sein. Wesentlich ist es, dass zumindest einem oder auch mehreren Pixeln eines Bilddatensatzes, vorzugsweise allen Pixeln, ein Temperaturwert innerhalb des Prüfzeitabschnittes zugeordnet werden kann. Insbesondere bei Prüfgut, welches sich aus unterschiedlichen Bauteilen zusammensetzt, wie beispielsweise eine bestückte Platine, kann dann eine Temperatur der einzelnen Bauteile bestimmt werden. Jeweils dem Bauteil zugehörige Pixel oder Gruppen von Pixeln können als dem jeweiligen Bauteil zugehörig definiert oder ausgewertet werden. Bei wiederkehrenden Prüfungen an gleichartigem Prüfgut können dann derartige Messpunkte automatisch immer an der gleichen Stelle des Prüfguts gemessen werden. Auch ist es vorstellbar, dass mittels Bildverarbeitung zunächst eine genaue Lage und Struktur des Prüfguts analysiert wird, bevor vordefinierte Messpunkte in Abhängigkeit der Lage oder Struktur des Prüfguts gemessen werden. Dann ist es nicht erforderlich, das Prüfgut besonders genau zu positionieren oder es kann gegebenenfalls nach Belieben zwischen verschiedenen Varianten von Prüfgut gewechselt werden.

Auch können mittels der Auswertevorrichtung die Bilddatensätze mit Messdaten zumindest eines Sensors im Prüfraum korreliert werden. Der Sensor kann ein Temperatursensor oder ein Feuchtesensor im Prüfraum sein. Beispielsweise eine im Rahmen eines definierten Prüfablaufs initiierte Temperaturerhöhung im Prüfraum könnte dann von dem Temperatursensor gemessen und an die Auswertevorrichtung als ein Datensatz übermittelt werden. Die Auswertevorrichtung kann dann diese Temperaturerhöhung bei einer Berechnung von Temperaturwerten berücksichtigen. Auch kann ein Temperatursensor im Prüfraum zur Kalibrierung der Wärmebildkamera genutzt werden.

Die Bilddaten, die Zeitwerte und die Temperaturwerte können als Messdatensätze in einer Speichereinrichtung gespeichert werden. Die Auswertevorrichtung kann die Speichereinrichtung aufweisen und die Messdatensätze speichern und/oder verarbeiten. Die Auswertevorrichung kann beispielsweise Mittel zur Datenverarbeitung aufweisen bzw. ein Computer sein, der die während einer thermografischen Aufnahme gemessenen Temperaturen von Sensoren zusammen mit den Bilddatensätzen und Zeitwerten speichert. Eine Auswertung der thermografischen Aufnahmen ist dann jederzeit möglich. Alternativ kann aber auch vorgesehen sein, dass die Auswertevorrichtung die thermografischen Aufnahmen unmittelbar auswertet bzw. verarbeitet. Eine Messung des Prüfguts kann dabei auch zyklisch erfolgen, wenn beispielsweise unterschiedliche Temperaturbereiche gemessen werden sollen.

Mittels eines Temperatursensors kann an einem Emissionshintergrund des Prüfraums, der relativ zur Wärmebildkamera hinter dem Prüfgut innerhalb des Prüfraums angeordnet sein kann, ein Temperaturreferenzwert des Emissionshintergrundes gemessen werden, wobei mittels der Auswertevorrichtung der Temperaturreferenzwert des Emissionshintergrundes innerhalb des Prüfzeitabschnittes erfasst, gespeichert und/oder verarbeitet werden kann. Wesentlich bei dem Verfahren ist dann, dass ein Emissionsgrad des Emissionshintergrundes bekannt ist, sodass ein Emissionsgrad des Prüfguts über eine Wärmebildaufnahme bzw. thermografische Aufnahme der Wärmebildkamera bestimmt werden kann, wenn eine Temperatur des Prüfguts bekannt ist. Gleichwohl ist es auch möglich, über die thermografische Aufnahme der Wärmebildkamera eine Temperatur des Prüfguts bzw. eines repräsentierenden Pixels genau zu bestimmen, wenn ein Emissionsgrad des Prüfguts an dem betreffenden Oberflächenpunkt bekannt ist. So kann auch mittels der Auswertevorrichtung der Temperaturreferenzwert bzw. die Temperatur des Emissionshintergrundes erfasst, gespeichert und/oder verarbeitet werden. Der dann für jeden Zeitwert gespeicherte Temperaturreferenzwert, der dem Temperaturwert eines Pixels, welches als Referenzpixel dient, entspricht, ermöglicht eine einfache nachträgliche Auswertung eines Prüfablaufs. Mittels der Auswertevorrichtung kann grundsätzlich aus einer gemessenen Temperatur und einem Emissionsgrad des Emissionshintergrundes ein Emissionsgrad des Prüfguts oder eine Temperatur des Prüfguts bestimmt werden. Dies ist unter der Voraussetzung möglich, dass der Emissionsgrad des Emissionshintergrundes bekannt ist. Als eine Referenz zur Bestimmung von Emissionsgrad oder Temperatur des Prüfguts durch die thermografische Aufnahme der Wärmebildkamera kann immer der Emissionshintergrund mit dem bekannten Emissionsgrad und der bekannten Temperatur herangezogen werden. Eine besonders genaue Berechnung des Emissionsgrades oder der Temperatur von repräsentierenden Pixeln des Prüfguts bzw. Oberflächenpunkten kann mittels bekannter Bildverarbeitungstechniken erfolgen.

So kann mittels der Auswertevorrichtung aus einem Emissionsgrad des Emissionshintergrundes ein Temperaturwert des Pixels bestimmt werden. Ein Emissionsgrad oder eine Temperatur des Pixels bzw. Prüfguts kann nach oder während einer Aufnahme des Prüfguts mit der Wärmebildkamera durch die Auswertevorrichtung bestimmt werden.

Mittels der Auswertevorrichtung kann die Wärmebildkamera vor, während oder nach einer thermografischen Aufnahme kalibriert werden, wobei ein Emissionsgrad oder ein Temperaturwert des Pixels nach oder während einer Aufnahme der Wärmebildkamera bestimmt werden kann. Da alle relevanten Daten in der Auswertevorrichtung erfasst bzw. gespeichert werden können, kann auch während oder nach der thermografischen Aufnahme mit der Wärmebildkamera die Wärmebildkamera kalibriert bzw. die Wärmebildaufnahme korrigiert werden. Prinzipiell ist es jedoch auch möglich, die Wärmebildkamera vor einer thermografischen Aufnahme dadurch zu kalibrieren, dass mit der Wärmebildkamera allein der Emissionshintergrund bei der für eine nachfolgende Messung vorgesehenen Temperatur aufgenommen wird. Die Kalibrierung kann dann mittels der Auswertevorrichtung oder je nach Ausführung der Wärmebildkamera direkt an der Wärmebildkamera erfolgen.

Besonders vorteilhaft ist es, wenn eine Einstellung einer Temperatur in dem Prüfraum mittels einer Steuervorrichtung gesteuert wird, wobei mittels der Auswertevorrichtung eine Veränderung der Bilddatensätze in dem Prüfzeitabschnitt bestimmbar sein kann, wobei bei einer Veränderung der Bilddatensätze die Auswertevorrichtung der Steuervorrichtung eine Zustandsänderung des Prüfguts signalisieren kann, wobei die Steuervorrichtung eine Temperatur in dem Prüfraum in Abhängigkeit der Zustandsänderung anpassen kann. Dadurch, dass dann die Auswertevorrichtung die Veränderung der Bilddatensätze nicht nur erkennt, und damit die Zustandsänderung des Prüfguts, sondern auch an die Steuervorrichtung, die die Prüfbedingung bzw. Temperatur in dem Prüfraum steuert, übermittelt bzw. signalisiert, wird es dann möglich, innerhalb des Prüfzeitabschnittes eines Prüfablaufs mittels der Steuervorrichtung die Temperatur in dem Prüfraum in Abhängigkeit der Zustandsänderung des Prüfguts bzw. der Veränderung der Bilddatensätze zu regeln bzw. anzupassen. Der Prüfzeitabschnitt kann dabei dem gesamten Prüfablauf entsprechen oder der Prüfablauf kann eine Vielzahl von Prüfzeitabschnitten, beispielsweise wenn es sich um stetig wiederholende Prüfungen handelt, aufweisen. Wenn beispielsweise eine unerwünschte Veränderung von Prüfgut von der Auswertevorrichtung festgestellt wird, kann die Temperatur in dem Prüfraum so weit verändert werden, dass sich die unerwünschte Veränderung des Prüfguts sich nicht fortsetzt bzw. revidiert wird. Damit ist es dann gegebenenfalls nicht mehr erforderlich, den Prüfablauf erneut durchzuführen. Die Wärmebildkamera kann damit, insbesondere zusammen mit der Auswertevorrichtung, eine Art optischer Sensor sein, der die Zustandsänderung des Prüfguts detektiert und diese an die Steuervorrichtung weitergibt. Die Steuervorrichtung passt dann in Abhängigkeit der Zustandsänderung die Prüfbedingungen an, weshalb durch die Signalisierung der Zustandsänderung an die Steuervorrichtung ein Regelkreis mit der Zustandsänderung als Regelgröße ausgebildet sein kann. Insgesamt wird dadurch eine verbesserte Regelung eines Prüfablaufs möglich, wodurch sonst gegebenenfalls erforderliche Wiederholungen von Prüfabläufen vermieden werden bzw. Kosten eingespart werden können.

Eine mit der Wärmebildkamera optisch erfassbare, physikalische oder chemische Veränderung an dem Prüfgut kann in dem Prüfzeitabschnitt mittels der Auswertevorrichtung als Zustandsänderung bestimmt werden. Dies kann durch Bildverarbeitung erfolgen, wobei ein erster Bilddatensatz mit einem zweiten bzw. n-ten Bilddatensatz verglichen werden kann. Der erste Bilddatensatz kann ein innerhalb des Prüfzeitabschnittes zeitlich vorangegangener Bilddatensatz oder ein bereits in der Auswertevorrichtung gespeicherter Bilddatensatz sein. So können auch Bilddatensätze von Referenzobjekten herangezogen werden, um die optisch erfassbare Veränderung zu detektieren. Die Auswertevorrichtung kann daher auch Mittel zur Datenverarbeitung, insbesondere zur Verarbeitung von Bilddatensätzen aufweisen. Hinsichtlich der optischen Erfassbarkeit der Veränderung an dem Prüfgut kann es bereits ausreichend sein, wenn die Wärmebildkamera das Prüfgut nur abschnittsweise erfasst.

Weiter kann an dem Prüfgut eine physikalische Veränderung eines Stoffs, beispielsweise Wasser, durch Sublimation, Resublimation, Kondensation, Verdampfung, Erstarren oder Schmelzen in dem Prüfzeitabschnitt mittels der Auswertevorrichtung bestimmt werden. Gegebenenfalls ist es unerwünscht, dass sich Wasser oder Eis an dem Prüfgut niederschlägt oder es soll festgestellt werden, an welcher Stelle des Prüfguts der Niederschlag erfolgt. Umgekehrt kann es von Interesse sein, ob und wie ein Niederschlag vom Prüfgut entfernt wird, beispielsweise wann eine beheizbare Scheibe abgetaut ist.

Darüber hinaus kann an dem Prüfgut eine chemische Veränderung des Prüfguts in dem Prüfzeitabschnitt mittels der Auswertevorrichtung bestimmt werden. Eine chemische Veränderung kann beispielsweise eine Korrosion des Prüfguts oder eine sonstige chemische Veränderung einer Oberfläche es Prüfguts sein. Wenn das Prüfgut einer Korrosionsatmosphäre ausgesetzt ist, kann sich nach einiger Zeit eine Korrosion der Oberfläche des Prüfguts einstellen, die dann ebenfalls detektierbar wäre.

Nach Erreichen einer definierten Zustandsänderung kann von der Steuervorrichtung der Prüfzeitabschnitt beendet werden. Eine definierte Zustandsänderung kann beispielsweise ein Bauteilversagen des Prüfguts sein. Auch kann die Zustandsänderung ein vollständiges Abtauen von Feuchtigkeit von dem Prüfgut sein. Wesentlich ist, dass mit dem Erreichen der Zustandsänderung der Prüfzeitabschnitt von der Steuervorrichtung beendet und nicht unnötigerweise fortgeführt wird. So kann gegebenenfalls der Prüfzeitabschnitt und damit der Prüfablauf insgesamt verkürzt werden.

In einer Ausführungsform des Verfahrens kann mittels der Auswertevorrichtung ein Pixel mit einem minimalen Temperaturwert, und bevorzugt ein Pixel mit einem maximalen Temperaturwert eines Bilddatensatzes ermittelt werden, wobei der minimale Temperaturwert mit einer Taupunkttemperatur im Prüfraum verglichen werden kann. Durch die Bestimmung des Pixels mit dem minimalen Temperaturwert wird es möglich die kälteste Stelle im Prüfraum oder an dem Prüfgut zu ermitteln. Sofern ein Niederschlag von Feuchtigkeit an dieser Stelle verhindert werden soll, kann dieser Pixel auf ein Erreichen der Taupunkttemperatur hin überwacht werden. Ergänzend ist es möglich einen Oberflächenpunkt mit dem maximalen Temperaturwert im Prüfraum bzw. am Prüfgut festzustellen und auf das Erreichen einer Maximaltemperatur hin zu überwachen. So kann beispielsweise verhindert werden, dass das Prüfgut im Rahmen des Prüfablaufs zerstört wird. Gerade bei einem Funktionstest von Prüfgut kann eine Temperatur des Prüfguts höher sein als die mit einem Temperatursensor im Prüfraum gemessene Temperatur.

Erfindungsgemäß wird eine Wärmebildkamera zur Temperaturmessung von Prüfgut in einer Prüfkammer, insbesondere einer Klimakammer, zur Durchführung des erfindungsgemäßen Verfahrens verwendet. Weitere vorteilhafte Ausführungsformen der Verwendung ergeben sich aus den auf den Verfahrensanspruch 1 rückbezogenen Unteransprüchen.

Bei der erfindungsgemäßen Prüfkammer, insbesondere Klimakammer, ist in einem Prüfraum der Prüfkammer Prüfgut anordbar und in einem Prüfzeitabschnitt im Prüfraum temperierbar, wobei in dem Prüfzeitabschnitt mittels einer Wärmebildkamera aus Pixeln gebildete thermografische Aufnahmen des Prüfguts, die durch Bilddatensätze repräsentiert sind, erfassbar sind, wobei die Bilddatensätze mittels einer Auswertevorrichtung verarbeitbar sind, wobei den Bilddatensätzen jeweils Zeitwerte innerhalb des Prüfzeitabschnitts zuordbar sind, wobei je Zeitwert mindestens einem Pixel eines Bilddatensatzes ein Temperaturwert innerhalb des Prüfzeitabschnitts zuordbar ist, derart, dass mittels der Wärmebildkamera eine Temperatur eines von dem Pixel repräsentierten Oberflächenpunktes des Prüfguts messbar ist. Zu den Vorteilen der erfindungsgemäßen Prüfkammer wird auf die Vorteilsbeschreibung des erfindungsgemäßen Verfahrens verwiesen.

Die Prüfkammer kann eine Emissionsabschirmung aufweisen, die innerhalb des Prüfraums zwischen der Wärmebildkamera und dem Prüfgut angeordnet ist, derart, dass ein Gehäuse der Wärmebildkamera gegenüber dem Prüfgut thermografisch abschirmbar ist, wobei die Emissionsabschirmung eine Blende ausbilden kann, durch die das Prüfgut mittels der Wärmebildkamera thermografisch aufnehmbar ist. Die Emissionsabschirmung kann folglich innerhalb des Prüfraums angeordnet und so ausgebildet sein, dass sie möglichst schnell eine Prüfraumtemperatur annehmen kann. Darüber hinaus ist die Emissionsabschirmung bzw. das Emissionsschild zwischen dem Prüfgut und der Wärmebildkamera bzw. einem Schutzgehäuse der Wärmebildkamera dann so angeordnet, dass die Emissionsabschirmung von der Wärmebildkamera bzw. dem Schutzgehäuse thermisch entkoppelt ist. Insbesondere ist die Emissionsabschirmung dann nicht an ein Objektiv der Wärmebildkamera gekoppelt, sondern mit einem Abstand zu dem Objektiv so angeordnet, dass die Wärmebildkamera durch die Blende der Emissionsabschirmung hindurch das Prüfgut aufnehmen bzw. bildtechnisch erfassen kann. Dabei wird eine Projektion von Wärmebildstrahlung der Wärmebildkamera auf das Prüfgut durch die Emissionsabschirmung verhindert. Ausgehend von dem Prüfgut ist lediglich eine Objektivmitte bzw. eine Objektivöffnung durch die Blende hindurch sichtbar, wobei ein Objektivring bzw. das Schutzgehäuse vollständig von der Emissionsabschirmung überdeckt sein kann. So wird es möglich auch bei vergleichsweise niedrigen Temperaturen im Prüfraum Wärmebildmessungen von dem Prüfgut anzufertigen, ohne dass diese durch eine Projektion von Wärmestrahlung der Wärmebildkamera auf das Prüfgut verfälscht werden. Dieser Vorteil ist bereits dann erzielbar, wenn eine Temperatur im Prüfraum unterhalb oder auch oberhalb einer Temperatur eines Schutzgehäuses der Wärmebildkamera liegt.

Vorteilhaft kann die Emissionsabschirmung eines Emissionsgrad von mindestens 0,9, bevorzugt von nahezu 1 aufweisen. Beispielsweise kann die Emissionsabschirmung mit einer Lackierung versehen sein, die diesen Emissionsgrad ausbildet. Die Emissionsabschirmung kann dann besonders wirkungsvoll eine Wärmestrahlung der Wärmebildkamera auf das Prüfgut abschirmen.

Die Emissionsabschirmung kann auch als eine Platte mit einer Blendenöffnung ausgebildet sein. Die Platte kann ein dünnes Metallblech sein, innerhalb dem eine runde Blendenöffnung der Blende ausgebildet ist. Eine derartige Emissionsabschirmung ist besonders einfach und kostengünstig herstellbar und kann leicht in einem Prüfraum angeordnet werden. Auch kann die Emissionsabschirmung besonders schnell eine im Prüfraum herrschende Temperatur annehmen, wenn es sich bei der Emissionsabschirmung um ein dünnes Blech handelt. Die Platte bzw. das dünne Blech kann in einer einfachen Ausführungsform vollkommen eben ausgebildet sein.

Die Prüfkammer kann auch einen Emissionshintergrund aufweisen, der relativ zur Wärmebildkamera innerhalb des Prüfraums angeordnet sein kann. Der Emissionshintergrund kann dann zwischen dem Prüfgut und beispielsweise einer Seitenwand des Prüfraums in diesem angeordnet und befestigt sein. Vorteilhaft kann der Emissionshintergrund eine im Prüfraum herrschende Temperatur vergleichsweise schnell annehmen. Wenn der Emissionshintergrund hinsichtlich seiner Gestalt homogen bzw. möglichst gleichförmig ausgebildet ist, kann bei einer Wärmebildaufnahme von Prüfgut vor dem Emissionshintergrund das Prüfgut besonders gut erkennbar sein bzw. das Prüfgut kann leicht von dem Hintergrund unterschieden werden. Insbesondere bei Temperaturwechseln im Prüfraum kann sich das Prüfgut gegenüber dem thermisch homogenen Emissionshintergrund in einer Wärmebildaufnahme deutlich unterscheidbar abheben. Der Emissionshintergrund kann parallel zu einer eventuell vorhandenen Emissionsabschirmung in dem Prüfraum angeordnet sein. Das Prüfgut kann dann zwischen dem Emissionshintergrund und der Emissionsabschirmung angeordnet werden. Aufgrund der parallelen, thermisch homogenen Oberflächen von Emissionshintergrund und Emissionsabschirmung werden Spiegelungen bzw. Projektionen von Wärmestrahlung auf das Prüfgut oder den Emissionshintergrund vermieden. Der Emissionshintergrund kann einen Emissionsgrad von mindestens 0,9, bevorzug von nahezu 1 aufweisen. Auch kann vorgesehen sein, dass der Emissionsgrad des Emissionshintergrundes mit einem Emissionsgrad einer eventuell vorhandenen Emissionsabschirmung übereinstimmend ausgebildet ist. Weiter kann der Emissionshintergrund als eine Platte ausgebildet sein, bei der es sich um ein dünnes Blech aus Metall handeln kann, welches vollkommen eben ausgebildet sein kann. Auch kann der Emissionshintergrund so groß ausgebildet sein, dass er eine Bildhintergrundebene bzw. ein Gesichtsfeld der Wärmebildkamera überdeckt. So kann sichergestellt werden, dass die Wärmebildkamera allein den Emissionshintergrund und das Prüfgut erfasst, ohne dass Wände der Prüfkammer oder andere Gegenstände oder Einbauten in einen thermografischen Erfassungsbereich der Wärmebildkamera hineinragen.

An dem Emissionshintergrund kann ein Temperatursensor angeordnet sein, wobei der Temperatursensor mit der Auswertevorrichtung der Prüfkammer gekoppelt sein kann. Dann wird es möglich mittels des Temperatursensors die tatsächliche Temperatur des Emissionshintergrundes zu erfassen, welche von einer Temperatur im Prüfraum abweichen kann. Wenn der Emissionsgrad des Emissionshintergrundes bekannt ist, kann dann die Wärmebildkamera während oder nach einer Messung kalibriert werden. Um eine Temperatur eines Emissionshintergrundes zum Zeitpunkt einer Wärmebildaufnahme einfacher erfassen zu können, können der Temperatursensor und die Wärmebildkamera über die Auswertevorrichtung miteinander so verbunden sein, dass eine gleichzeitige Erfassung und Zuordnung der jeweiligen Daten erfolgen kann.

Mittels einer Steuervorrichtung bzw. Temperiervorrichtung des Prüfraumes kann eine Temperatur in einem Temperaturbereich von - 75°C bis + 180°C, vorzugsweise - 100°C bis + 200°C innerhalb des Prüfraums ausgebildet werden. Der Prüfraum ist dann für eine Vielzahl möglicher Temperaturmessungen in unterschiedlichsten Temperaturbereichen geeignet.

Das Prüfgut kann zumindest teilweise in einem Prüfgehäuse, welches zumindest abschnittsweise aus für die Wärmebildkamera transparentem Material, vorzugsweise aus Polyethylen (PE) oder high-density Polyethylen (HDPE) ausgebildet sein kann, innerhalb des Prüfraums angeordnet sein. So kann es erforderlich sein Prüfgut, wie beispielsweise eine Platine, in einem Gehäuse, in dem das Prüfgut tatsächlich auch verbaut wird, unterschiedlichsten Klimabedingungen auszusetzen, um eine möglichst realistische Prüfung des Prüfguts durchzuführen. Um dennoch eine Temperaturmessung des Prüfguts mittels der Wärmebildkamera innerhalb des Gehäuses zu ermöglichen und um eine aufwendige Positionierung von Temperatursensoren an dem Prüfgut zu verhindern, kann das Prüfgehäuse vollständig aus Polyethylen ausgebildet sein oder zumindest ein Fenster aus Polyethylen aufweisen. Dies ist besonders vorteilhaft, da Polyethylen zumindest teilweise für die Strahlung bzw. Wellenlänge der Wärmebildkamera strahlungsoptisch transparent bzw. durchsichtig ist. So können auch realistische Prüfabläufe mit Prüfgut innerhalb von Gehäusen durchgeführt werden.

Nachfolgend wird die Erfindung unter Bezugnahme auf die beigefügten Zeichnungen näher erläutert.

Es zeigen:
- **Fig. 1**: eine schematische Darstellung einer Prüfraums;
- **Fig. 2**: eine schematische Darstellung einer Prüfkammer;
- **Fig. 3**: eine schematische Darstellung eines Prüfablaufs.

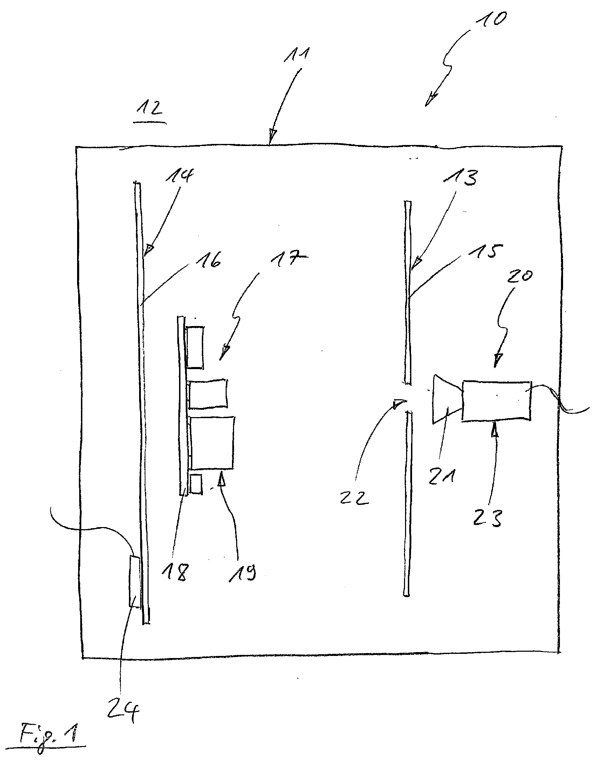

Die **Fig. 1** zeigt einen Prüfraum 10, der temperierbar ist und durch temperaturisolierte Wände 11 gegenüber einer Umgebung 12 abgeschlossen ist. Innerhalb des Prüfraums 10 ist eine Emissionsabschirmung 13 und ein Emissionshintergrund 14 von den Wänden 11 beabstandet angeordnet. Die Emissionsabschirmung 13 und der Emissionshintergrund 14 sind jeweils aus aus Metall bestehenden Blechen 15 bzw. 16 gebildet, die mit einem hier nicht dargestellten Lack beschichtet sind. Der jeweilige Emissionsgrad der Bleche 15 und 16 liegt in einem Bereich von 0,9 bis nahe 1. Die Bleche 15 und 16 sind relativ zueinander parallel angeordnet, wobei zwischen den Blechen 15 und 16 in relativer Nähe zum Emissionshintergrund 14 Prüfgut 17 im Prüfraum 10 angeordnet ist. Das Prüfgut 17 umfasst eine Platine 18 mit verschiedenen Bauteilen 19. Weiter ist im Prüfraum 10 eine Wärmebildkamera 20 mit einem Objektiv 21 angeordnet. In dem Blech 15 bzw. der Emissionsabschirmung 13 ist eine Blendenöffnung 22 ausgebildet, so dass durch die Blendenöffnung 22 mittels der Wärmebildkamera 20 eine thermografische Aufnahme des Prüfguts 17 erfolgen kann. Innerhalb der thermografischen Aufnahme sind dann das Prüfgut 17 und der Emissionshintergrund 14 sichtbar bzw. erfassbar. Eine mögliche Reflektion eines Gehäuses 23 der Wärmebildkamera 20 auf das Prüfgut 17 wird durch die Emissionsabschirmung 13 verhindert. Weiter ist an dem Emissionshintergrund 14 bzw. dem Blech 16 rückseitig ein Temperatursensor 24 angebracht, bei dem eine Temperatur des Blechs 16 fortlaufend erfasst werden kann. Mittels einer hier nicht dargestellten Auswertevorrichtung kann aufgrund des bekannten Emissionsgrades des Emissionshintergrundes 14 und der mit dem Temperatursensor 24 gemessenen Temperatur in einer thermografischen Aufnahme bzw. einer Wärmebildaufnahme der Wärmebildkamera 20 eine Referenz bzw. eine Referenzfläche innerhalb der Wärmebildaufnahme bzw. eines entsprechenden Bilddatensatzes geschaffen werden, über die eine Temperatur oder ein Emissionsgrad des Prüfguts 17 vergleichsweise genau bei jeder beliebigen Prüftemperatur bestimmt werden kann. Dabei werden die Bildbereiche der Wärmebildaufnahme des Emissionshintergrundes 14 mit den Bildbereichen bzw. Pixeln oder Gruppen von Pixeln des Prüfguts 17 bildverarbeitungstechnisch verglichen. Insgesamt wird es so möglich, mit der Wärmebildkamera 20 für jeden Punkt bzw. jedes Pixel eines mit der Wärmebildkamera 20 aufgenommenen Bilddatensatzes eine genaue Temperaturmessung durchzuführen. Insbesondere kann eine Temperaturmessung für Oberflächenpunkte des Prüfguts 17 durchgeführt werden, ohne dass ein Temperatursensor an dem Prüfgut 17 angebracht werden müsste.

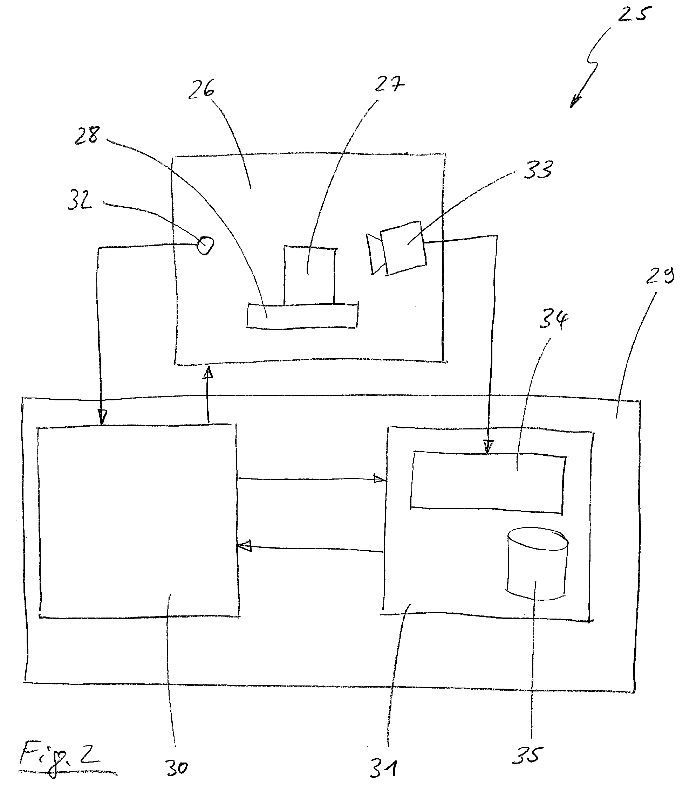

Die **Fig. 2** zeigt eine schematische Darstellung einer Prüfkammer 25 ohne dass die erforderlichen Mittel zur Herstellung einer Prüfbedingung bzw. Temperierung und Klimatisierung der Prüfkammer 25 dargestellt sind. Innerhalb eines Prüfraums 26 ist Prüfgut 27 auf einem Rütteltisch 28 angeordnet. Das Prüfgut 27 wird mittels des Rütteltisches 28 bewegt, wobei gleichzeitig der Prüfraum 26 klimatisiert wird. Die Prüfkammer 25 umfasst eine Anlagensteuerung 29 mit einer Steuervorrichtung 30 und einer Auswertevorrichtung 31. An die Steuervorrichtung 30 ist ein Temperatursensor 32 innerhalb des Prüfraums 26 angeschlossen, der kontinuierlich Temperaturmesswerte an die Steuervorrichtung 30 übermittelt. Die Steuervorrichtung 30 regelt aufgrund der vom Temperatursensor 32 erhaltenen Temperaturmesswerte eine Temperatur in dem Prüfraum 26 gemäß einer Vorgabe eines vorausbestimmten Prüfablaufs.

In dem Prüfraum 26 ist weiter eine Wärmebildkamera 33 in einem hier nicht näher dargestellten Schutzgehäuse angeordnet. Mittels der Wärmebildkamera 33 wird das Prüfgut 27 zumindest teilweise thermografisch aufgenommen, wobei die Wärmebildkamera 33 entsprechende Bilddatensätze an die Auswertevorrichtung 31 übermittelt. Die Auswertevorrichtung 31 weist ihrerseits eine Bildverarbeitungseinrichtung 34 und eine Speichereinrichtung 35 auf. Die Bildverarbeitungseinrichtung 34 verarbeitet die Bilddatensätze, wobei die Bilddatensätze in der Speichereinrichtung 35 gespeichert werden. Weiter weist die Auswertevorrichtung 31 den Bilddatensätzen, die in einer stetigen Abfolge aufgenommen werden, jeweils Zeitwerte innerhalb eines Prüfzeitabschnitts eines Prüfablaufs zu. Die Steuervorrichtung 30 übermittelt der Auswertevorrichtung 31 mit den Zeitwerten synchronisierte Temperaturwerte, die auch in der Speichereinrichtung 35 gespeichert werden. Es kann daher während oder nach dem Prüfablauf der Prüfablauf mit allen relevanten Daten ausgewertet werden.

Insbesondere ist vorgesehen, dass die Auswertevorrichtung 31 eine Zustandsänderung des Prüfguts 27 erkennt, wobei diese Erkennung mittels der Bildverarbeitungseinrichtung 34 erfolgt. Die Erkennung einer Zustandsänderung kann durch einen einfachen Vergleich von Bilddatensätzen durchgeführt werden. Kommt es zu einer mechanischen Beschädigung des Prüfguts 27 durch die Bewegung des Rütteltisches 28 bei einer bestimmten Temperatur innerhalb des Prüfraums 26 wird aufgrund der mechanischen Beschädigung das Prüfgut 27 mit der Wärmebildkamera 33 eine optisch erfassbare Veränderung an dem Prüfgut 27 detektiert. Beispielsweise ein hier nicht dargestellter Riss im Prüfgut 27 kann dann als Zustandsänderung erkannt werden. Die Auswertevorrichtung 31 klassifiziert die Zustandsänderung und übermittelt ein Signal an die Steuervorrichtung 30, wobei die Steuervorrichtung 30 den Prüfzeitabschnitt bzw. den Prüfablauf beendet. So ist es möglich, den Prüfablauf vorzeitig zu beenden. Alternativ kann die Auswertevorrichtung 31 an die Speichereinrichtung 35 ein direkt am Prüfgut 27 gemessenen Temperaturwert, wie zur **Fig. 1** beschrieben, übermitteln, wobei die Steuervorrichtung 30 eine Temperatur im Prüfraum 26 noch genauer regeln kann.

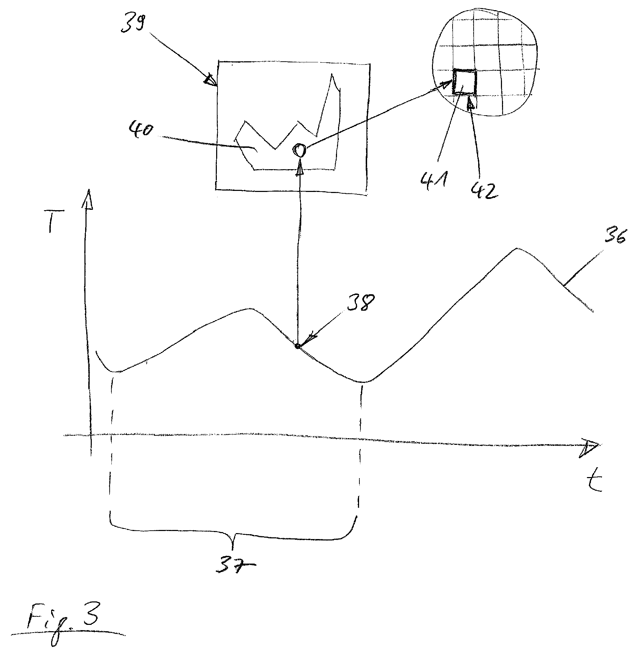

Die **Fig. 3** zeigt eine schematische Darstellung eines Prüfablaufs anhand eines Zeit-Temperaturdiagramms. Mit einer Linie 36 ist hier eine Funktion einer Temperatur über die Zeit beispielhaft dargestellt. Innerhalb eines Prüfzeitabschnittes 37 wird zu einem Zeitwert 38 mit einer hier nicht dargestellten Wärmebildkamera eine thermografische Aufnahme 39 von Prüfgut 40 bzw. ein Bilddatensatz erfasst. Ein Pixel 41 der thermografischen Aufnahme 39 entspricht dabei einem Oberflächenpunkt 42 des Prüfguts 40. Die thermografische Aufnahme 39 ist hier zur näheren Veranschaulichung abschnittsweise vergrößert dargestellt. Mittels der hier nicht dargestellten Auswertevorrichtung kann einer Abfolge von Bilddatensätzen bzw. thermografischen Aufnahmen 39 und deren Pixeln 41 je Pixel 41 einen Temperaturwert zugeordnet werden. Für jede thermografische Aufnahme 39 ergibt sich daher für jedes Pixel 41 eine Linie 39. Damit wird es möglich zu jedem Zeitpunkt des Prüfzeitabschnittes 37 für jedes Pixel 41 einen Temperaturwert zu bestimmen.

## Patentansprüche

1. Verfahren zur Temperaturmessung von Prüfgut in einer Prüfkammer (25), insbesondere Klimakammer, wobei in einem Prüfraum (10, 26) der Prüfkammer Prüfgut (17, 27, 40) angeordnet und in einem Prüfzeitabschnitt (37) im Prüfraum temperiert wird, wobei in dem Prüfzeitabschnitt mittels einer Wärmebildkamera (20, 33) aus Pixeln (41) gebildete thermografische Aufnahmen (39) des Prüfguts, die durch Bilddatensätze repräsentiert werden, erfasst werden, wobei die Bilddatensätze mittels einer Auswertevorrichtung (31) verarbeitet werden, wobei den Bilddatensätzen jeweils Zeitwerte (38) innerhalb des Prüfzeitabschnitts zugeordnet werden,
**dadurch gekennzeichnet,**
**dass** je Zeitwert zumindest einem Pixel eines Bilddatensatzes ein Temperaturwert zugeordnet wird, derart, dass mittels der Wärmebildkamera eine Temperaturmessung eines von dem Pixel repräsentierten Oberflächenpunktes (42) des Prüfguts erfolgt.

2. Verfahren nach Anspruch 1,
**dadurch gekennzeichnet,**
**dass** die Zuordnung des Temperaturwertes in Abhängigkeit eines Intensitätswertes des Pixels (41) erfolgt.

3. Verfahren nach Anspruch 1 oder 2,
**dadurch gekennzeichnet,**
**dass** Temperaturwerte von einzelnen Pixeln (41), Gruppen von Pixeln oder allen Pixeln eines Bilddatensatzes bestimmt wird.

4. Verfahren nach einem der vorangehenden Ansprüche,
**dadurch gekennzeichnet,**
**dass** mittels der Auswertevorrichtung (31) die Bilddatensätze mit Messdaten zumindest eines Sensors im Prüfraum (10, 26) korreliert werden.

5. Verfahren nach einem der vorangehenden Ansprüche,
**dadurch gekennzeichnet,**
**dass** die Bilddaten, die Zeitwerte (38) und die Temperaturwerte als Messdatensätze in einer Speichereinrichtung (35) gespeichert werden.

6. Verfahren nach einem der vorangehenden Ansprüche,
**dadurch gekennzeichnet,**
**dass** mittels eines Temperatursensors (24, 32) an einem Emissionshintergrund (14) des Prüfraums (10, 26), der relativ zur Wärmebildkamera (20, 33) hinter dem Prüfgut (17, 27, 40) innerhalb des Prüfraums angeordnet ist, ein Temperaturreferenzwert des Emissionshintergrundes gemessen wird, wobei mittels der Auswertevorrichtung (31) der Temperaturreferenzwert des Emissionshintergrundes innerhalb des Prüfzeitabschnitts (37) erfasst, gespeichert und/oder verarbeitet wird.

7. Verfahren nach Anspruch 6,
**dadurch gekennzeichnet,**
**dass** mittels der Auswertevorrichtung (31) aus einem Emissionsgrad des Emissionshintergrundes (14) ein Temperaturwert des Pixels (41) bestimmt wird.

8. Verfahren nach einem der vorangehenden Ansprüche,
**dadurch gekennzeichnet,**
**dass** mittels der Auswertevorrichtung (31) die Wärmebildkamera (20, 33) vor, während oder nach einer thermografischen Aufnahme (39) kalibriert wird, wobei ein Emissionsgrad oder ein Temperaturwert des Pixels (41) nach oder während einer Aufnahme der Wärmebildkamera bestimmt wird.

9. Verfahren nach einem der vorangehenden Ansprüche,
**dadurch gekennzeichnet,**
**dass** eine Einstellung einer Temperatur in dem Prüfraum (10, 26) mittels einer Steuervorrichtung (30) gesteuert wird, wobei mittels der Auswertevorrichtung (31) eine Veränderung der Bilddatensätze in dem Prüfzeitabschnitt (37) bestimmbar ist, wobei bei einer Veränderung der Bilddatensätze die Auswertevorrichtung der Steuervorrichtung eine Zustandsänderung des Prüfguts (17, 27, 40) signalisiert, wobei die Steuervorrichtung eine Temperatur in dem Prüfraum in Abhängigkeit der Zustandsänderung anpasst.

10. Verfahren nach Anspruch 9,
**dadurch gekennzeichnet,**
**dass** eine mit der Wärmebildkamera (20, 33) optisch erfassbare, physikalische oder chemische Veränderung an dem Prüfgut (17, 27, 40) in dem Prüfzeitabschnitt (37) mittels der Auswertevorrichtung (31) als Zustandsänderung bestimmt wird.

11. Verfahren nach Anspruch 9 oder 10,
**dadurch gekennzeichnet,**
**dass** nach Erreichen einer definierten Zustandsänderung von der Steuervorrichtung (30) der Prüfzeitabschnitt (37) beendet wird.

12. Verfahren nach einem der vorangehenden Ansprüche,
**dadurch gekennzeichnet,**
**dass** mittels der Auswertevorrichtung (31) ein Pixel (41) mit einem minimalen Temperaturwert, und bevorzugt ein Pixel mit einem maximalen Temperaturwert eines Bilddatensatzes ermittelt wird, wobei der minimale Temperaturwert mit einer Taupunkttemperatur im Prüfraum (10, 26) verglichen wird.

13. Verwendung einer Wärmebildkamera (20, 33) zur Temperaturmessung von Prüfgut (17, 27, 40) in einer Prüfkammer (25), insbesondere einer Klimakammer, zur Durchführung eines Verfahrens nach einem der vorangehenden Ansprüche.

14. Prüfkammer (25), insbesondere Klimakammer, wobei in einem Prüfraum (10, 26) der Prüfkammer Prüfgut (17, 27, 40) anordbar und in einem Prüfzeitabschnitt (37) im Prüfraum temperierbar ist, wobei in dem Prüfzeitabschnitt mittels einer Wärmebildkamera (20, 33) aus Pixeln (41) gebildete thermografische Aufnahmen (31) des Prüfguts, die durch Bilddatensätze repräsentiert sind, erfassbar sind, wobei die Bilddatensätze mittels einer Auswertevorrichtung (31) verarbeitbar sind, wobei den Bilddatensätzen jeweils Zeitwerte (38) innerhalb des Prüfzeitabschnitts zuordbar sind,
**dadurch gekennzeichnet,**
**dass** je Zeitwert zumindest einem Pixel eines Bilddatensatzes ein Temperaturwert innerhalb des Prüfzeitabschnitts zuordbar ist, derart, dass mittels der Wärmebildkamera eine Temperatur eines von dem Pixel repräsentierten Oberflächenpunktes (42) des Prüfguts messbar ist.

15. Prüfkammer nach Anspruch 14,
**dadurch gekennzeichnet,**
**dass** die Prüfkammer (25) eine Emissionsabschirmung (13) aufweist, die innerhalb des Prüfraums (10, 26) zwischen der Wärmebildkamera (20, 33) und dem Prüfgut (17, 27, 40) angeordnet ist, derart, dass ein Gehäuse (23) der Wärmebildkamera gegenüber dem Prüfgut thermografisch abschirmbar ist, wobei die Emissionsabschirmung eine Blende (22) ausbildet, durch die das Prüfgut mittels der Wärmebildkamera thermografisch aufnehmbar ist.

16. Prüfkammer nach Anspruch 14 oder 15,
**dadurch gekennzeichnet,**
**dass** die Prüfkammer (25) einen Emissionshintergrund (14) aufweist, der relativ zur Wärmebildkamera (20, 33) hinter Prüfgut (17, 27, 40) innerhalb des Prüfraums (10, 26) angeordnet ist.

17. Prüfkammer nach Anspruch 16,
**dadurch gekennzeichnet,**
**dass** an dem Emissionshintergrund (14) ein Temperatursensor (24, 32) angeordnet ist, wobei der Temperatursensor mit der Auswertevorrichtung (31) der Prüfkammer (25) gekoppelt sind.

18. Prüfkammer nach einem der Ansprüche 14 bis 17,
**dadurch gekennzeichnet,**
**dass** das Prüfgut (17, 27, 40) zumindest teilweise in einem Prüfgehäuse, welches zumindest abschnittsweise aus für die Wärmebildkamera (20, 33) transparentem Material, vorzugsweise PE oder HDPE ausgebildet ist, innerhalb des Prüfraums (10, 26) angeordnet ist.
